(19) Europäisches Patentamt / European Patent Office / Office européen des brevets

(11) **EP 4 317 227 A1**

(12) **EUROPEAN PATENT APPLICATION**
published in accordance with Art. 153(4) EPC

(43) Date of publication:
**07.02.2024 Bulletin 2024/06**

(21) Application number: **22775467.8**

(22) Date of filing: **18.03.2022**

(51) International Patent Classification (IPC):
*C08F 255/02* (2006.01)   *C08J 3/12* (2006.01)
*C08L 23/08* (2006.01)   *C08L 23/12* (2006.01)
*C08L 25/06* (2006.01)   *C08J 9/20* (2006.01)
*C08K 3/26* (2006.01)   *C08K 3/36* (2006.01)

(52) Cooperative Patent Classification (CPC):
**C08F 255/02; C08J 3/12; C08J 9/20; C08K 3/26;
C08K 3/36; C08L 23/08; C08L 23/12; C08L 25/06**

(86) International application number:
**PCT/JP2022/012689**

(87) International publication number:
**WO 2022/202680 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2021 JP 2021048806**

(71) Applicant: **Sekisui Kasei Co., Ltd.**
**Kita-ku**
**Osaka-shi**
**Osaka 530-8565 (JP)**

(72) Inventor: **OWAKI, Hiroki**
**Osaka-shi, Osaka 530-8565 (JP)**

(74) Representative: **Hoffmann Eitle**
**Patent- und Rechtsanwälte PartmbB**
**Arabellastraße 30**
**81925 München (DE)**

(54) **COMPOSITE RESIN PARTICLES, COMPOSITE RESIN FOAMING PARTICLES, AND FOAM MOLDED BODY**

(57)   The present invention provides a foam molded body having excellent heat resistance (low heating dimensional change rate), excellent flame retardancy, and excellent storage stability, composite resin particles for producing the foam molded body, and the like. The present invention relates to composite resin particles comprising a polypropylene-based resin, an ethylene-vinyl acetate copolymer, and a polystyrene-based resin, foam particles of the composite resin particles, and a foam molded body of the foam particles.

EP 4 317 227 A1

**Description**

Technical Field

The present invention relates to composite resin particles, composite resin foam particles, a foam molded body, and the like.

Background Art

It is known that a foam molded body made of a polystyrene-based resin has excellent rigidity, thermal insulation, lightweight properties, water resistance, and foam moldability, but has low chemical resistance and impact resistance. These properties are compensated for by utilizing a composite resin foam molded body obtained from composite resin particles of a polystyrene-based resin and a polyolefin-based resin. The composite resin particles are generally produced by using a base resin of a polyolefin-based resin, such as a polyethylene-based resin, as seed particles (also referred to as core particles), and adding a styrene-based monomer to the seed particles, followed by polymerization. This polymerization is also referred to as seed polymerization. The composite resin particles are generally foamed (also referred to as pre-foamed) to form foam particles after a foaming gas is blended, and the foam particles are placed in a mold and heated to produce a foam molded body.

By changing the type of polyolefin-based resin constituting the composite resin particles, the characteristics of the composite resin foam molded body can be changed. For example, heat resistance is improved when a polypropylene-based resin is used, and impact resistance is improved when linear low-density polyethylene is used. There has been a demand for composite resin foam molded bodies having high heat resistance mainly for automobile components, and composite resin foam molded bodies having excellent heat resistance obtained from composite resin particles composed of a polypropylene-based resin and a polystyrene-based resin have been used (PTL 1). However, if the pressure of the vapor used for foam molding is not high, foaming becomes insufficient, and it is difficult to obtain a molded body having desired characteristics, such as shape and density. When the pressure of the vapor required for foam molding is high, a large amount of energy is required for molding, and further, it is necessary to use a molding machine corresponding to the pressure, which has increased the cost required for molding.

Therefore, composite resin particles obtained by compounding a base resin composed of high-density polyethylene and an ethylene copolymer (e.g., an ethylene-vinyl acetate copolymer) with a polystyrene-based resin by seed polymerization have been used as alternatives in some cases. When these particles were used, foam molding was possible without increasing the pressure of vapor so much (PTL 2 and PTL 3). Since flame retardancy is often required for foam molded bodies used as automobile components, flame retardants have been incorporated into the foam molded bodies.

Citation List

Patent Literature

PTL 1: JP4718645B
PTL 2: JP2015-189912A
PTL 3: JP6251409B

Summary of Invention

Technical Problem

The present inventor noticed that when a flame retardant is blended into a composite resin obtained by compounding a base resin composed of high-density polyethylene and an ethylene-vinyl acetate copolymer with a polystyrene-based resin by seed polymerization, its foam molded body is colored reddish in an accelerated storage stability test.

An object of the present invention is to provide a foam molded body that has excellent heat resistance (low heating dimensional change rate) and excellent flame retardancy, and that is not colored in an accelerated storage stability test, composite resin particles for producing the foam molded body, and the like. Another object of the present invention is to provide composite resin particles with a reduced amount of powder generated during production of composite resin foam particles. Another object of the present invention is to provide composite resin foam particles that can be foam-molded at constant air pressure due to high fusibility at a low vapor pressure, and that have excellent moldability. Another object of the present invention is to provide a foam molded body having excellent bending strength. Another object of the present invention is to provide a foam molded body having excellent impact resistance.

Solution to Problem

In view of the above problems, the present inventor found that composite resin particles comprising a polypropylene-based resin, an ethylene-vinyl acetate copolymer, and a polystyrene-based resin, and foam resin particles obtained from the composite resin particles are foam-molded, whereby a foam molded body that is not colored in an accelerated storage stability test can be obtained, and that the foam molded body has high flame retardancy and excellent heat resistance (low heating dimensional change rate) derived from the polypropylene-based resin. Thus, the present invention has been completed.

The present invention typically includes the following aspects.

Item 1.

Composite resin particles comprising a polypropylene-based resin, an ethylene-vinyl acetate copolymer, and a polystyrene-based resin.

Item 2.

The composite resin particles according to Item 1, wherein the content of the polypropylene-based resin is 2 to 35 mass%, the content of the ethylene-vinyl acetate copolymer is 3 to 50 mass%, and the content of the polystyrene-based resin is 40 to 95 mass%, based on the total mass of the composite resin particles.

Item 3.

The composite resin particles according to Item 1 or 2, wherein the content of the ethylene-vinyl acetate copolymer in the composite resin particles is 60 to 1000 parts by mass based on 100 parts by mass of the content of the polypropylene-based resin.

Item 4.

The composite resin particles according to Item 1 or 2, wherein the content of the ethylene-vinyl acetate copolymer in the composite resin particles is 10 to 60 parts by mass based on 100 parts by mass of the content of the polypropylene-based resin, the polystyrene-based resin comprises a (meth)acrylic acid ester-derived resin component and a styrene-based monomer-derived resin component, and the (meth)acrylic acid ester-derived resin component is contained in an amount of 0.05 to 5.00 mass% of the mass of the styrene-based monomer-derived resin component.

Item 5.

The composite resin particles according to any one of Items 1 to 4, wherein the ratio of the total content mass of the polypropylene-based resin and the ethylene-vinyl acetate copolymer in the composite resin particles to the content mass of the polystyrene-based resin in the composite resin particles is 5/95 to 60/40.

Item 6.

The composite resin particles according to any one of Items 1 to 5, wherein the ethylene-vinyl acetate copolymer has a melting point of 100 to 120°C.

Item 7.

The composite resin particles according to any one of Items 1 to 6, wherein the ethylene-vinyl acetate copolymer has a ratio (Mw/Mn) of mass average molecular weight (Mw) to number average molecular weight (Mn) of 1.0 to 7.0.

Item 8.

The composite resin particles according to any one of Items 1 to 7, wherein the ethylene-vinyl acetate copolymer has a melt flow rate of 0.5 g/10 min to 10 g/10 min.

Item 9.

The composite resin particles according to any one of Items 1 to 8, wherein the polypropylene-based resin has a melting point of 130 to 150°C.

Item 10.

The composite resin particles according to any one of Items 1 to 9, wherein the polypropylene-based resin is random polypropylene.

Item 11.

The composite resin particles according to any one of Items 1 to 10, wherein the composite resin particles further comprise a flame retardant, and the content thereof is 0.5 to 10 mass% of the mass of the composite resin particles excluding the flame retardant.

Item 12.

The composite resin particles according to Item 11, wherein the flame retardant is a halogen-based flame retardant.

Item 13.

The composite resin particles according to any one of Items 1 to 12, wherein the composite resin particles further comprise an inorganic component, and the content thereof is 0.01 to 5 mass% of the mass of the composite resin particles.

Item 14.

The composite resin particles according to Item 13, wherein the inorganic component is talc or silica.

Item 15.

The composite resin particles according to any one of Items 1 to 14, which are seed polymerization particles in which seed particles containing the polypropylene-based resin and the ethylene-vinyl acetate copolymer are impregnated and polymerized with a styrene-based monomer.

Item 16.

Foam particles comprising the composite resin particles according to any one of Items 1 to 15.

Item 17.

The foam particles according to Item 15, which have a bulk density of 10 kg/m$^3$ to 200 kg/m$^3$.

Item 18.

A foam molded body comprising the foam particles according to Item 16 or 17.

Item 19.

The foam molded body according to Item 18, which has a density of 20 kg/m$^3$ to 50 kg/m$^3$.

Item 20.

An automobile component comprising the foam molded body according to Item 18 or 19.

Advantageous Effects of Invention

The composite resin particles and composite foam particles of the present invention can provide a foam molded body that is not colored in an accelerated storage stability test.

The composite resin particles and composite foam particles of the present invention can provide a foam molded body having high flame retardancy and excellent heat resistance (low heating dimensional change rate) derived from the polypropylene-based resin.

The composite resin particles of the present invention can reduce the amount of powder generated during production of composite resin foam particles (also referred to simply as "the amount of powder" in the present specification), thereby extending the mold life.

The composite resin particles and composite resin particles of the present invention allow foam molding at a high heat-fusion rate even with a medium having a low vapor pressure (e.g., water vapor), so that the energy required for foam molding can be reduced. Accordingly, the equipment required for foam molding can be simplified, and the cost required for foam molding can be reduced. Therefore, the composite resin particles and composite resin foam particles of the present invention have excellent productivity of the foam molded body.

The composite resin particles and composite foam particles of the present invention can provide a foam molded body having excellent bending strength.

The composite resin particles and composite foam particles of the present invention can provide a foam molded body having excellent impact resistance.

Description of Embodiments

In the present specification, the terms "comprising" and "containing" are intended to include the terms "consisting essentially of" and "consisting of."

The composite resin particles are typically obtained by impregnating base resin particles (seed particles) with a styrene-based monomer, and polymerizing the styrene-based monomer. The base resin contains at least a polypropylene-based resin and an ethylene-vinyl acetate copolymer. The total content of the polypropylene-based resin and ethylene-vinyl acetate copolymer in the seed particles may be, for example, 80 to 100 mass%, 85 to 100 mass%, 90 to 100 mass%, or 95 to 100 mass%, based on the total mass of the seed particles.

Polypropylene-Based Resin

The polypropylene-based resin is not particularly limited, and known resins can be used. Examples of the polypropylene-based resin include homopolymers, random copolymers, block copolymers, and the like. Random copolymers are preferred in terms of high moldability (i.e., foaming molding can be performed due to high fusibility at a low vapor pressure, and the foaming ratio during foaming tends to be high).

As the polypropylene-based resin, a recycled product, such as a recycled resin obtained by recovering and recycling a polypropylene-based resin used as a packaging material or the like, can be used.

The copolymer may contain an olefin (e.g., ethylene or butene) other than propylene. Examples of random copolymers include an ethylene-propylene random copolymer, a propylene-butene random copolymer, an ethylene-propylene-butene random copolymer, and the like. Examples of block copolymers include an ethylene-propylene block copolymer, a propylene-butene block copolymer, an ethylene-propylene-butene block copolymer, and the like.

The proportion of the component derived from an olefin other than propylene in the copolymer can be, for example, 0.01 to 10 mass%, 0.01 to 8 mass%, 0.1 to 7 mass%, or 0.1 to 6 mass%, preferably 1 to 7 mass%, and more preferably 2 to 6 mass%.

A commercially available resin can be used as the polypropylene-based resin. For example, such resins are available from Prime Polymer Co., Ltd., SunAllomer Ltd., Sumitomo Chemical Co., Ltd., and other companies.

The melting point of the polypropylene-based resin is not particularly limited, but can be, for example, 130 to 165°C, preferably 130 to 150°C, more preferably 130 to 145°C, and even more preferably 130 to 134°C. A melting point within this range is advantageous in terms of the improvement of moldability (high fusion rate) at a low vapor pressure or the tendency to increase the foaming ratio during foaming. The melting point can be specified by the method described in the Examples.

The melt mass-flow rate (also referred to as "MFR" in the present specification) of the polypropylene-based resin is not particularly limited, but is preferably 0.1 g/10 min to 20.0 g/10 min, more preferably 1 g/10 min to 10 g/10 min, and particularly preferably 4 g/10 min to 8 g/10 min. MFR within this range is advantageous in terms of foam moldability. MFR can be specified by the method described in the Examples.

The polypropylene-based resin may have a density of 880 kg/m$^3$ to 950 kg/m$^3$. A density within this range is advantageous in terms of impact resistance and molding processability. The density is preferably 890 kg/m$^3$ to 930

kg/m³, more preferably 890 kg/m³ to 920 kg/m³, and particularly preferably 890 kg/m³ to 910 kg/m³. A density within this range is advantageous in terms of foam moldability. The density can be specified in the following manner.

Density of Polypropylene-Based Resin

The density of the polypropylene-based resin is measured by the density gradient column method according to JIS K6922-1: 1998.

The content ratio of the polypropylene-based resin in the seed particles can be, for example, 10 to 77 mass%, 10 to 70 mass%, 10 to 60 mass%, 15 to 50 mass%, or 18 to 70 mass%, preferably 18 to 60 mass%, more preferably 18 to 50 mass%, and even more preferably 18 to 40 mass%, based on the total mass of the seed particles.

When the polystyrene-based resin contains a (meth)acrylic acid ester-derived resin component, the content ratio of the polypropylene-based resin in the seed particles can be, for example, 10 to 95 mass%, 10 to 90 mass%, 20 to 80 mass%, or 30 to 80 mass%, preferably 18 to 90 mass%, more preferably 18 to 80 mass%, and even more preferably 30 to 80 mass%, based on the total mass of the seed particles.

The content ratio of the polypropylene-based resin in the composite resin particles can be, for example, 2 to 35 mass%, preferably 4 to 30 mass%, and more preferably 5 to 20 mass%, based on the total mass of the composite resin particles.

When the polystyrene-based resin contains a (meth)acrylic acid ester-derived resin component, the content ratio of the polypropylene-based resin in the composite resin particles can be, for example, 2 to 35 mass%, preferably 4 to 31 mass%, and more preferably 9 to 31 mass%, based on the total mass of the composite resin particles.

When the content ratio of the polypropylene-based resin in the seed particles or the composite resin particles is within the above range, it is advantageous in terms of a low heating dimensional change rate or flame-retardant properties.

Ethylene-Vinyl Acetate Copolymer

The ethylene-vinyl acetate copolymer is a copolymer of ethylene and vinyl acetate. The ethylene-vinyl acetate copolymer is superior to copolymers of ethylene and other ester monomers (e.g., alkyl acrylate ester, alkyl methacrylate ester, and aliphatic saturated vinyl monocarboxylic acid (excluding vinyl acetate)) in terms of a less amount of powder generated during the production of composite resin foam particles or a lower heating dimensional change rate.

As the ethylene-vinyl acetate copolymer, a recycled product, such as a recycled resin obtained by recovering and recycling an ethylene-vinyl acetate copolymer used as a packaging material or the like, can be used.

The proportion of the vinyl acetate-derived component in the ethylene-vinyl acetate copolymer is preferably 1 to 20 mass%, more preferably 1 to 14 mass%, and even more preferably 1 to 10 mass%.

The melting point of the ethylene-vinyl acetate copolymer is not particularly limited, but can be, for example, 85 to 120°C, preferably 100 to 120°C, more preferably 100 to 115°C, and even more preferably 100 to 110°C. A melting point within this range is advantageous in terms of the low heating dimensional change rate of the foam molded body or excrement fusibility during foam molding due to good compatibility with the polypropylene-based resin. The melting point can be specified by the method described in the Examples.

The ratio (Mw/Mn) of the mass average molecular weight (Mw) of the ethylene-vinyl acetate copolymer to the number average molecular weight (Mn) of the ethylene-vinyl acetate copolymer is not particularly limited, but can be, for example, 1.0 to 7.5, and preferably 1.0 to 7.0. Mw/Mn within this range is advantageous in terms of the high strength of the foam molded body or the improvement of impact resistance. Mw/Mn is more preferably 3.0 to 6.0, and even more preferably 3.5 to 5.5. The number average molecular weight and mass average molecular weight can be specified by the method described in the Examples.

MFR of the ethylene-vinyl acetate copolymer is not particularly limited, but can be, for example, 0.3 g/10 min to 5.0 g/10 min, and preferably 0.5 g/10 min to 5.0 g/10 min. MFR within this range is advantageous in terms of the high strength of the foam molded body, the improvement of impact resistance, or the improvement of moldability (high fusion rate) at a low vapor pressure. MFR is more preferably 0.5 g/10 min to 4.0 g/10 min, even more preferably 0.5 g/10 min to 3.0 g/10 min, and particularly preferably 0.7 g/10 min to 3.0 g/10 min. MFR can be specified by the method described in the Examples.

The content ratio of the ethylene-vinyl acetate copolymer in the seed particles can be, for example, 27 to 90 mass%, 30 to 90 mass%, 40 to 90 mass%, 50 to 85 mass%, or 30 to 82 mass%, preferably 40 to 82 mass%, more preferably 50 to 82 mass%, and even more preferably 60 to 82 mass%, based on the total mass of the seed particles.

When the polystyrene-based resin contained in the composite resin particles contains a (meth)acrylic acid ester-derived resin component, the content ratio of the ethylene-vinyl acetate copolymer in the seed particles can be, for example, 5 to 90 mass%, 10 to 90 mass%, 20 to 80 mass%, or 20 to 70 mass%, preferably 10 to 82 mass%, more preferably 20 to 82 mass%, and even more preferably 20 to 70 mass%, based on the total mass of the seed particles.

The content ratio of the ethylene-vinyl acetate copolymer in the composite resin particles can be, for example, 3 to 50 mass%, preferably 5 to 40 mass%, and more preferably 10 to 30 mass%, based on the total mass of the composite resin particles.

When the polystyrene-based resin contained in the composite resin particles contains a (meth)acrylic acid ester-derived resin component, the content ratio of the ethylene-vinyl acetate copolymer in the composite resin particles can be, for example, 3 to 50 mass%, preferably 3 to 40 mass%, and more preferably 3 to 30 mass%, based on the total mass of the composite resin particles.

When the content ratio of the ethylene-vinyl acetate copolymer in the seed particles or composite resin particles is within the above range, it is advantageous in terms of molding processability or flame-retardant properties.

The content of the ethylene-vinyl acetate copolymer in the seed particles or composite resin particles can be, for example, 60 to 1000 parts by mass or 80 to 1000 parts by mass, preferably 100 to 1000 parts by mass, more preferably 120 to 1000 parts by mass, and even more preferably 130 to 1000 parts by mass, based on 100 parts by mass of the content of the polypropylene-based resin.

When the polystyrene-based resin contains a (meth)acrylic acid ester-derived resin component, the content of the ethylene-vinyl acetate copolymer in the seed particles or composite resin particles can be, for example, 10 to 1000 parts by mass or 10 to 500 parts by mass, preferably 20 to 500 parts by mass, and more preferably 20 to 300 parts by mass, based on 100 parts by mass of the content of the polypropylene-based resin.

A content of the ethylene-vinyl acetate copolymer within this range is advantageous in terms of the improvement of moldability (higher fusion rate) at a low vapor pressure.

Inorganic Component

The seed particles may contain an inorganic component in addition to the polypropylene-based resin and the ethylene-vinyl acetate copolymer. When the seed particles or composite resin particles contain an inorganic component, fine cells are easily obtained. Examples of inorganic components include inorganic foam regulators, such as talc, silica, calcium silicate, calcium carbonate, sodium borate, and zinc borate. Talc and silica are preferred in terms of easily homogenizing the cell size.

The content of the inorganic component can be, for example, 0.01 to 5 mass%, and preferably 0.1 to 1 mass%, based on the total mass of the polypropylene-based resin and the ethylene-vinyl acetate copolymer.

The inorganic component may be added during mixing of a polypropylene-based resin and an ethylene-vinyl acetate copolymer, or may be added to a mixed resin obtained by mixing a polypropylene-based resin and an ethylene-vinyl acetate copolymer.

Carbon Component

The seed particles may contain a carbon component in addition to the polypropylene-based resin and the ethylene-vinyl acetate copolymer. Examples of the carbon component include furnace black, Ketjen black, channel black, thermal black, acetylene black, graphite, carbon fiber, and the like.

The carbon component to be added to the seed particles is preferably in the form of particles, and the average particle size thereof may be 5 nm to 100 nm, and preferably 15 nm to 35 nm. The average particle size of the carbon component is an average value of the diameters of particles observed by an electron microscope. However, when the carbon component is carbon black, the average particle size of the carbon black is an average value of the diameters of particles calculated by measuring small spherical components (which have a contour of fine crystals and cannot be separated) constituting aggregates of the carbon black with an electron microscope photograph.

The carbon component is preferably contained in an amount of 1 to 8 mass% based on the total mass of the polypropylene-based resin and the ethylene-vinyl acetate copolymer.

When the amount of the carbon component in the composite resin particles is within the above range, the foam molded body has sufficient black color and sufficient mechanical strength.

Other Components

The seed particles may contain other components in addition to the polypropylene-based resin and the ethylene-vinyl acetate copolymer. Examples of other components include colorants, nucleating agents, stabilizers, fillers (reinforcing materials), higher fatty acid metal salts, antistatic agents, lubricants, natural or synthetic oils, waxes, UV absorbers, weather stabilizers, anti-fogging agents, anti-blocking agents, slip agents, coating agents, neutron-blocking agents, and the like. When the seed particles contain other components, the content thereof may be 0.001 to 10 mass%, preferably 0.001 to 5 mass%, and more preferably 0.001 to 3 mass%, based on the total mass of the seed particles.

Production of Seed Particles

The seed particles can be obtained by a known method used for the production of seed particles for forming foam molded bodies. For example, a base resin (a polyethylene-based resin, an ethylene copolymer, etc.) is melt-kneaded and extruded in an extruder to obtain a strand, and the obtained strand is cut in air, in water, or while heating, for granulation. The resin component may be mixed by a mixer before being placed in the extruder.

The seed particles may have any known shape, but are preferably cylindrical, elliptical spherical (egg-shaped), or spherical. Further, the shape is more preferably elliptical spherical or spherical in terms of good filling ability of the foam particles obtained from the seed particles into the mold.

The seed particles preferably have an average particle size of 0.5 to 1.4 mm.

Composite Resin Particles

The composite resin particles contain, as resin components, a polypropylene-based resin and an ethylene-based copolymer derived from a base resin, and a polystyrene-based resin derived from a styrene-based monomer. The total content of the polypropylene-based resin, ethylene-vinyl acetate copolymer, and polystyrene-based resin in the composite resin particles can be, for example, 80 to 100 mass%, 85 to 100 mass%, 90 to 100 mass%, or 95 to 100 mass%, based on the total mass of the composite resin particles. The composite resin particles can be produced, for example, by a seed polymerization method (impregnation and polymerization of seed particles with a styrene-based monomer).

In seed polymerization, the amount of the styrene-based monomer used is preferably an amount in which the ratio of the total mass of the polypropylene-based resin and ethylene-vinyl acetate copolymer contained in the seed particles to the amount of the styrene monomer used is 5/95 to 60/40. The content of the polystyrene-based resin in the composite resin particles is an amount corresponding to the amount of the styrene-based monomer used. Therefore, the ratio of the total content mass of the polypropylene-based resin and ethylene-vinyl acetate copolymer in the composite resin particles to the content mass of the polystyrene-based resin in the composite resin particles is preferably 5/95 to 60/40. When the amount of the styrene-based monomer used or the content mass of the polystyrene-based resin is within the above range, it is advantageous in that moldability (high fusion rate) at a low vapor pressure is improved, the amount of powder is reduced, the strength of the foam molded body is improved, or the impact resistance of the foam molded body is improved. The range is more preferably 5/95 to 55/45, even more preferably 10/90 to 50/50, still even more preferably 20/80 to 45/55, and particularly preferably 20/80 to 30/70.

Examples of the polystyrene-based resin include polymers derived from styrene-based monomers, such as styrene, α-methylstyrene, p-methylstyrene, and t-butylstyrene. Further, the styrene-based polymer may be a polymer formed from a styrene-based monomer and another monomer copolymerizable with the styrene-based monomer. Examples of other monomers include polyfunctional monomers, such as divinylbenzene, and (meth)acrylic acid esters that do not contain a benzene ring in the structure, such as butyl (meth)acrylate. Resin components derived from such other monomers may be contained in the styrene-based polymer in an amount not exceeding 5 mass%.

A polystyrene-based resin in which a (meth)acrylic acid ester is copolymerized with a styrene-based monomer is composed of a component derived from the (meth)acrylic acid ester and a component derived from the styrene-based monomer. The component derived from the (meth)acrylic acid ester is also referred to as the (meth)acrylic acid ester-derived resin component.

The (meth)acrylic acid ester may be an acrylic acid ester or a methacrylic acid ester, but is preferably an acrylic acid ester. Examples of the (meth)acrylic acid ester include methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, and the like; preferably methyl acrylate, ethyl acrylate, propyl acrylate, butyl acrylate, pentyl acrylate, hexyl acrylate, and 2-ethylhexyl acrylate; and more preferably butyl acrylate.

The content ratio of the (meth)acrylic acid ester-derived resin component may be 0.05 to 5.00 mass%, and preferably 0.05 to 3.00 mass%, based on the mass of the styrene-based monomer-derived resin component. For example, in Example 8, 300 g of a styrene monomer, 20 g of butyl acrylate, and 1080 g of a styrene monomer are used as polystyrene-based resins; thus, the content ratio of the resin component derived from butyl acrylate is 1.45% (20/(300 + 1080) × 100).

When the content ratio of the (meth)acrylic acid ester-derived resin component is within the above range, foam molding of foam particles having a high content ratio of the polypropylene-based resin can be easily performed, even if the vapor pressure of the heating medium during foam molding is not high.

Flame Retardant

The composite resin particles may contain a flame retardant. Since the composite resin particles have relatively high flame-retardant properties even without containing a flame retardant, it is not necessary to contain a flame retardant (e.g., a halogen-based flame retardant).

Examples of flame retardants include known halogen-based flame retardants, phosphorus-based flame retardants, inorganic flame retardants, and the like. The flame retardants may be used singly or in combination of two or more. When the composite resin particles contain a flame retardant, the flame retardant is preferably a halogen-based flame retardant, such as a bromine-based flame retardant, a chlorine-based flame retardant, or a chlorine bromine-containing flame retardant, in terms of imparting high flame retardancy to the foam molded body with a small amount of the flame retardant.

Examples of halogen-based flame retardants include tetrabromobisphenol A and derivatives thereof (e.g., tetrabromobisphenol A-bis(2,3-dibromo-2-methylpropyl ether), tetrabromobisphenol A-bis(2,3-dibromopropyl ether), and tetrabromobisphenol A-bis(allyl ether)), triallyl isocyanurate hexabromide, tris(2,3-dibromopropyl)isocyanurate, tetrabromocyclooctane, hexabromocyclododecane, and the like.

In general, when a halogen-based flame retardant is contained, the flame retardancy of the foam molded body is improved, while the heat resistance of the foam molded body tends to decrease. However, in the foam molded body of the present invention, the heating dimensional change rate is low, and therefore, the decrease in heat resistance is small.

The content of the flame retardant can be, for example, 1.5 to 6.0 mass%, preferably 1.5 to 4.0 mass%, and more preferably 2.0 to 3.5 mass%, based on the mass of the composite resin particles excluding the flame retardant. A content of the flame retardant within this range is advantageous because the flame retardancy and heat resistance of the foam molded body can both be achieved at high levels.

When the composite resin particles contain a flame retardant, it is preferable to contain a flame retardant aid. Because a flame retardant aid is contained, flame retardancy derived from the flame retardant can be further enhanced. Examples of flame retardant aids include organic peroxides, such as dicumyl peroxide (DCP), cumene hydroperoxide, and diacyl peroxide; 2,3-dimethyl-2,3-diphenylbutane (also known as biscumyl), 3,4-dimethyl-3,4-diphenylhexane, and the like.

The content of the flame retardant aid can be, for example, 50 parts by mass or less, preferably 10 to 40 parts by mass, and more preferably 15 to 25 parts by mass, based on 100 parts by mass of the flame retardant. When the content of the flame retardant aid is within this range, the decrease in the impact resistance and heat resistance of the foam molded body can be suppressed.

The composite resin particles may have any known shape, but are preferably cylindrical, nearly spherical, or spherical, and more preferably nearly spherical or spherical in terms of the good filling ability of composite resin foam particles formed from the composite resin particles into the mold.

The average particle size of the composite resin particles is preferably 0.6 mm to 1.8 mm, in terms of the good filling ability of the composite resin foam particles into the mold.

Method for Producing Composite Resin Particles

The method for producing composite resin particles is not particularly limited as long as the composite resin particles described above can be obtained. As an example, composite resin particles can be obtained by the following production method. Specifically, composite resin particles can be obtained by polymerizing a styrene-based monomer impregnated into seed particles. This method is a so-called seed polymerization method.

An example of a method for producing composite resin particles using a seed polymerization method is described below.

First, seed particles, a styrene-based monomer, and optionally a polymerization initiator are dispersed in an aqueous suspension. When a polymerization initiator is used, the styrene-based monomer and the polymerization initiator may be mixed in advance.

As the polymerization initiator, one generally used as an initiator for suspension polymerization of styrene-based monomers can be suitably used. Examples include organic peroxides, such as benzoyl peroxide, di-t-butyl peroxide, t-butyl peroxybenzoate, dicumyl peroxide, 2,5-dimethyl-2,5-di-t-butyl peroxyhexane, t-butyl peroxy-3,5,5-trimethylhexanoate, and t-butyl peroxy-2-ethylhexyl carbonate; azo compounds, such as azobisisobutyronitrile and azobisdimethylvaleronitrile; and the like. One or two or more of these polymerization initiators may be used. Dicumyl peroxide can also act as a flame retardant aid.

Examples of the aqueous medium constituting the aqueous suspension include water and a mixed medium of water and a watersoluble solvent (e.g., lower alcohol).

The amount of the polymerization initiator used is preferably 0.01 to 0.9 parts by mass, and more preferably 0.1 to 0.5 parts by mass, based on 100 parts by mass of the styrene-based monomer.

A dispersant may be added to the aqueous suspension, as needed. The dispersant is not particularly limited, and any known dispersant can be used. Specific examples include poorly soluble inorganic substances, such as calcium phosphate, magnesium pyrophosphate, sodium pyrophosphate, and magnesium oxide. Further, a surfactant, such as sodium dodecylbenzenesulfonate, may also be used.

Next, the obtained dispersion is heated to a temperature at which the styrene-based monomer does not substantially polymerize, thereby impregnating the seed particles with the styrene-based monomer. The time for impregnating the seed particles with the styrene-based monomer is not particularly limited, and can be, for example, 1 minute to 24 hours, preferably 20 minutes to 4 hours, and more preferably 30 minutes to 2 hours.

Then, the styrene-based monomer is polymerized. The polymerization is not particularly limited, but is preferably performed at 115 to 150°C, preferably at 120 to 140°C, for 1.5 to 5 hours. The polymerization is generally performed in a closed container that can be pressurized. It is preferable to perform impregnation and polymerization of the styrene monomer multiple times (e.g., two times, three times, or four times). By performing impregnation and polymerization several times, the generation of the polymer powder of the styrene-based resin can be minimized. Since the powder shortens the life of the mold for molding, it is preferable to use a small amount of powder. Further, in consideration of the decomposition temperature of the polymerization initiator, polymerization may be performed while the styrene-based monomer is impregnated, instead of starting polymerization after the seed particles are impregnated with the styrene-based monomer.

When polymerization is performed several times, it is preferable, in the second and subsequent polymerization steps, to perform polymerization while supplying the styrene-based monomer at a rate of 0.001 to 0.1 parts by mass per second based on 100 parts by mass of the seed particles.

Composite resin particles containing a flame retardant and a flame retardant aid can be produced by a method in which seed particles are impregnated with the flame retardant and the flame retardant aid together with a styrene-based monomer, a method in which particles after polymerization are impregnated with them, or the like.

Expandable Particles

Expandable particles contain the composite resin particles described above and a foaming agent.

Usable examples of foaming agents include organic gases, such as propane, n-butane, isobutane, n-pentane, isopentane, cyclopentane, n-hexane, and isohexane; and inorganic gases, such as carbon dioxide, nitrogen, helium, argon, and air. These foaming agents may be used singly or in a mixture of two or more. The organic gas is preferably any of n-butane, isobutane, n-pentane, and isopentane, or a combination thereof.

The content of the foaming agent in the expandable particles is preferably 5 to 25 parts by mass based on 100 parts by mass of the composite resin particles.

Since foam particles obtained by pre-foaming expandable particles are reduced in foam moldability due to the escape of gas, it was sometimes difficult to ensure a long time from the production of the foam particles to the filling of the foam particles in the mold for molding. However, when n-pentane, isopentane, cyclopentane, n-hexane, isohexane, or the like is used as a foaming agent, the escape of gas from the foam particles is suppressed, so that the time from the production of the foam particles to the filling of the foam particles in the mold for molding can be made longer. Therefore, when the foam particles of the present invention contain n-pentane, isopentane, cyclopentane, n-hexane, isohexane, or the like as a foaming agent, there are advantages that the time until filling can be lengthened, and that desired flame retardancy can be ensured even if the flame retardancy of the foam molded body is reduced due to the residual foaming agent. That is, the degree of freedom in selecting the type and amount of foaming agent can be increased by adopting the composite resin particles of the present invention.

The expandable particles can be obtained, for example, by impregnating the composite resin particles during or after polymerization with a foaming agent. Impregnation can be performed by a method known per se. For example, impregnation during polymerization can be performed by performing a polymerization reaction in a closed container, and pressing a foaming agent into the container. Impregnation after polymerization can be performed by, for example, pressing a foaming agent into a closed container containing the composite resin particles.

Composite Resin Foam Particles

Foam particles (generally also referred to as "pre-foam particles") are particles obtained by preliminarily foaming composite resin particles. For example, foam particles can be obtained by foaming expandable particles impregnated with a foaming agent. Since foam particles produced from the composite resin particles described above are fused together by a medium having a low vapor pressure (e.g., water vapor), the energy required for foam molding can be reduced, the equipment required for foam molding can be simplified, and therefore, the cost required for foam molding can be reduced.

The bulk density of the foam particles is preferably 15 kg/m$^3$ to 200 kg/m$^3$, more preferably 20 kg/m$^3$ to 100 kg/m$^3$, and even more preferably 20 kg/m$^3$ to 50 kg/m$^3$. A bulk density within this range is advantageous in terms of the high strength of the foam molded body and the lightweight of the foam molded body.

The shape of the foam particles is preferably spherical or nearly spherical. The average particle size thereof is preferably 1.0 mm to 9.0 mm, and more preferably 2.0 mm to 6.4 mm.

The foam particles can be obtained by foaming expandable particles to a desired bulk density by a known method. Foaming can be achieved by foaming expandable particles using heating vapor of a gauge pressure preferably 0.05 MPa to 0.20 MPa, and more preferably 0.06 MPa to 0.15 MPa.

Foam Molded Body

The foam molded body is a foam body composed of a fusion body of foam particles, and is obtained, for example, by foam-molding the foam particles described above. The foam molded body uses the composite resin particles described above as a raw material, and thus has excellent bending strength, impact resistance, or heat resistance.

The density of the foam molded body is preferably 15 kg/m$^3$ to 200 kg/m$^3$, more preferably 20 kg/m$^3$ to 100 kg/m$^3$, and even more preferably 20 kg/m$^3$ to 50 kg/m$^3$. When the density is within this range, excellent lightweight properties and strength can be achieved. The density of the foam molded body can be specified by the method described in the Examples.

The bending strength of the foam molded body can be, for example, 0.35 MPa or more, 0.35 MPa to 0.60 MPa, 0.38 MPa to 0.60 MPa, or 0.40 MPa to 0.50 MPa, and preferably 0.40 MPa to 0.45 MPa. The bending strength can be specified by the method described in the Examples.

The bending breaking point of the foam molded body can be, for example, 15 mm or more, 15 mm to 50 mm, or 15 mm to 40 mm, preferably 20 mm to 40 mm, and more preferably 20 mm to 30 mm. The bending breaking point can be specified by the method described in the Examples.

The heating dimensional change rate of the foam molded body can be, for example, 1.5% or less, 1.2% or less, 1.1% or less, 0.5 to 1.5%, or 0.5 to 1.2%, and preferably 0.5 to 1.1%. The heating dimensional change rate can be specified by the method described in the Examples.

The falling ball impact value of the foam molded body can be, for example, 25 cm or more, 31 cm or more, 25 cm to 60 cm, or 31 cm to 50 cm, preferably 32.5 cm to 50 cm, and more preferably 35 cm to 50 cm. The falling ball impact value can be specified by the method described in the Examples.

Regarding the flame retardancy of the foam molded body, the burning rate specified in the Federal Motor Vehicle Safety Standards FMVSS 302, particularly by the method described in the Examples, is preferably 80 mm/min or less, more preferably 40 mm/min or less, and even more preferably 0 mm/min (self-extinguishing) .

The foam molded body can be obtained by filling a mold of a foam molding machine with foam particles, thermally fusing the foam particles together while foaming the foam particles by heating. Water vapor can be suitably used as the medium for heating.

Since the composite resin foam particles of the present invention are sufficiently foamed and fused even in a medium (e.g., water vapor) at a low pressure (e.g., a gauge pressure of 0.05 MPa to 0.16 MPa, 0.05 MPa to 0.15 MPa, 0.05 MPa to 0.12 MPa, 0.05 MPa to 0.11 MPa, or 0.05 MPa to 0.10 MPa), the energy required for foam molding can be reduced, the equipment required for foam molding can be simplified, and as a result, the cost required for foam molding can be reduced (i.e., excellent productivity).

Other production conditions, such as process temperature, process pressure, and process time in each production process, are appropriately set according to the production equipment, raw materials, and the like to be used.

The foam molded body can be used for, for example, automobile components, cushioning materials, packing materials, building materials, shoe members, sporting goods, and the like. Specific examples include tire core materials of bicycles, wheelchairs, etc.; interior materials, seat core materials, shock-absorbing members (e.g., bumper core materials), vibration-absorbing members, etc. for transportation equipment, such as automobiles, railway vehicles, and airplanes; midsole members, insole members, or outsole members of shoes; core materials of hitting equipment for sporting goods, such as rackets and bats; protective equipment of sporting goods, such as pads and protectors; medical, nursing, welfare, or health-care goods, such as pads and protectors; fenders; floats; toys; floor foundation materials; wall materials; beds; cushions; transportation containers for electronic components, various industrial materials, and foods; and the like.

Preferred are automobile interior materials, shock-absorbing members, vibration-absorbing members, and component packaging materials.

Examples

An embodiment of the present invention will be described in more detail below with reference to Examples and the like; however, the present invention is not limited thereto.

The methods for specifying various physical properties and the like in the Examples etc. are described below.

MFR of Polypropylene-Based Resin and Ethylene-Vinyl Acetate Polymer

MFR was measured according to JIS K6922-1: 1998 at 190°C under a load of 2.16 kg.

Melting Point of Polypropylene-Based Resin and Ethylene-Vinyl Acetate Copolymer

The melting point was measured by the method described in JIS K7122: 1987 "Testing Methods for Heat of Transitions of Plastics." Specifically, using a differential scanning calorimeter device RDC220 (produced by Seiko Instruments Inc.), a measurement container was filled with 7 mg of a sample, the temperature was increased, decreased, and increased between room temperature and 220°C at a heating and cooling speed of 10°C/L under a nitrogen gas flow rate of 30 mL/min, and the melting peak temperature of the DSC curve in the second temperature increase was defined as the melting point. When there were two or more melting peaks, the lower peak temperature was defined as the melting point.

Number Average Molecular Weight (Mn) and Mass Average Molecular Weight (Mw) of Ethylene-Vinyl Acetate Copolymer

The molecular weight was specifically measured in the following manner. 6 mL of O-dichlorobenzene was added to a container containing 6 mg of a sample, and the container was sealed tightly to prepare a solution. The solution was prepared by dissolving the sample by heating at 160°C for 1 hour using DF-8200 produced by Tosoh Corporation. This solution was used as a measurement sample, and the measurement was performed by gel permeation chromatography under the following measurement conditions. Standard polystyrene was measured in advance, and the average molecular weight (Mn, Mw) of the sample was obtained from the calibration curve of standard polystyrene prepared in advance.

Device used: HLC-8321GPC/HT gel permeation chromatograph produced by Tosoh Corporation

```
Guard column = TSKgel guard column HHR(30)HT2 (7.5 mm I.D. × 7.5
cm × 1 column) produced by Tosoh Corporation
```

Columns: TSKgel GMHHR-H(20)HT2 (7.8 mm I.D. × 30 cm) produced by Tosoh Corporation × 3 columns
Mobile phase: O-dichlorobenzene
Sample flow rate: 1.0 mL/min
Reference flow rate: 0.5 mL/min
Detector: RI
Sample concentration: 0.1 wt%
Injection volume: 300 μL
Measurement time: 34 min

Set temperature for each part of the device

Solvent stocker: 40°C
Column oven (column temperature): 160°C
Sample table: 160°C
Injection valve: 160°C
Detector: 160°C

The standard polystyrene samples for calibration curve used were High Polymer Kit and Oligomer Kit (product names, produced by Tosoh Corporation) having a mass average molecular weight of 8,420,000, 5,480,000, 2,110,000, 1,090,000, 706,000, 427,000, 190,000, 96,400, 37,900, 17,400, 5,060, 2,550, 1,013, or 589.
After the standard polystyrenes for calibration curve were grouped into A (8,420,000, 1,090,000, 190,000, 17,400, 1,013), B (5,480,000, 706,000, 96,400, 5,060, 589), and C (2,110,000, 427,000, 37,900, 2,550), A was weighed (each 10 mg) and then dissolved in 30 mL of O-dichlorobenzene. B and C were also weighed (each 10 mg) and then dissolved in 30 mL of O-dichlorobenzene. The standard polystyrene calibration curve was obtained by preparing a calibration curve (cubic formula) from the retention time obtained after injection of 300 μL of each solution of A, B, and C and measurement. The average molecular weight was calculated using the calibration curve.

Bulk Density of Composite Resin Foam Particles

A measuring cylinder was filled with composite resin foam particles up to a scale of 500 cm$^3$. However, when the measuring cylinder was visually observed horizontally and even one of the composite resin foam particles reached the scale of 500 cm$^3$, the filling was completed. Next, the mass of the composite resin foam particles filled in the measuring cylinder was weighed with two significant digits after the decimal point, and the mass was defined as W (g). The bulk density of the composite resin foam particles was calculated by the following formula.

$$\text{Bulk density (kg/m}^3) = (W/500) \times 1000$$

Amount of Powder Generated during Production of Composite Resin Foam Particles

5 kg of composite resin foam particles pre-foamed to a bulk density of 0.025 g/cm$^3$ were classified using a sieve with a nominal mesh opening of 0.9 mm. The mass (D (g)) of powder passed through the 0.9-mm opening was measured, and the amount of powder (P) relative to 5 kg of the composite resin foam particles was calculated by the following formula.

$$P\ (\%) = D/(5 \times 1000) \times 100$$

Since the powder may shorten the life of the mold, a smaller amount of powder is desirable. The amount of powder is desirably 0.04% or less, more desirably 0.03% or less, and even more desirably 0.02% or less.

Density of Foam Molded Body

The mass (a) and volume (b) of a test piece (75 mm × 300 mm × 35 mm) cut from a foam molded body (dried at 50°C for 4 hours or more after molding) were each measured to three significant digits, and the density (g/cm$^3$) of the foam molded body was determined by the formula (a)/(b).

Bending Strength and Bending Breaking Point of Foam Molded Body

The bending strength (average maximum bending strength) and bending breaking point were measured according to the method described in JIS K7221-1: 2006 "Rigid cellular plastics - Determination of flexural properties- Part 1: Basic bending test." Specifically, a Tensilon universal tester (UCT-10T, produced by Orientec) and universal tester data processing software (UTPS-237, produced by Softbrain Co., Ltd.) were used, the size of a rectangular parallelepiped test piece was 25 mm wide × 130 mm long × 20 mm thick (with a skin surface only on the pressure surface side), the test speed was 10 mm/min, the pressure wedge was 5R, the support stand was 5R, and the distance between the supporting points was 100 mm. The measurement was performed while pressure was applied so that the skin-free surface of the test piece extended. The number of test pieces was 5. The test pieces were conditioned for 16 hours under a class 2 standard atmosphere with the symbol "23/50" of JIS K 7100: 1999 "Plastics-Standard atmospheres for conditioning and testing" (temperature: 23°C, relative humidity: 50%) and then used for measurement under the same standard atmosphere.
The bending strength (MPa) was calculated by the following formula.

$$R = (1.5F_R \times L/bd^2) \times 10^3$$

R: bending strength (MPa)
$F_R$: maximum load (kN)
L: distance between supporting points (mm)
b: width of test piece (mm)
d: thickness of test piece (mm)

A bending strength of 0.35 MPa or more is desirable, and 0.40 MPa or more can be evaluated that excellent bending strength is provided.
In this test, the breaking detection sensitivity was set to 0.5%, and when the decrease in the load sampling point exceeded the set value of 0.5% (deflection: 30 mm) in comparison with the previous load sampling point, the previous sampling point was measured as the bending breaking point displacement (mm), and the average of 5 tests was determined and defined as the bending breaking point (mm). A bending breaking point of 15 mm or more is desirable, and 20 mm or more can be evaluated that excellent flexibility is provided.

Heating Dimensional Change Rate of Foam Molded Body

The heating dimensional change rate of the foam molded body was measured by the B method described in JIS K 6767: 1999 "Cellular plastics -Polyethylene- Methods of test." A test piece of length 150 mm × width 150 mm × height 20 mm was cut out from the foam molded body. On the surface of the test piece, three straight lines having a length of 50 mm oriented in the longitudinal direction were drawn parallel to each other at intervals of 50 mm, and three straight lines having a length of 50 mm oriented in the lateral direction were drawn parallel to each other at intervals of 50 mm. Thereafter, the test piece was left in a hot air circulation dryer at 80°C for 168 hours, then taken out from the dryer, and left in a standard state (20 ± 2°C, humidity: 65 ± 5%) for 1 hour. Next, the length of each of the six straight lines drawn on the surface of the test piece was measured, and an arithmetic average value L1 of the lengths of the six straight lines was calculated. The degree of change S was calculated based on the following formula, and an absolute value of the degree of change S was defined as the heating dimensional change rate (%).

$$S = 100 \times (L1-50)/50$$

A heating dimensional change rate of 1.5% or less can be evaluated that the dimensional change rate is low and dimensional stability is good, and 1.1% or less can be evaluated that more excellent dimensional stability is provided.

Burning Rate and Flame Retardancy of Foam Molded Body

The burning rate (mm/min) was measured by the method according to the Federal Motor Vehicle Safety Standards FMVSS 302. The test piece (bulk foaming factor: 40 times) had a size of 350 mm × 100 mm × 12 mm (thickness), and skin was present on at least two faces of 350 mm × 100 mm.
The flame retardancy was evaluated based on the burning rate according to the following criteria.
If the fire is extinguished before the measurement start point is reached, the burning rate is assumed to be 0 mm/min, and it can be evaluated that the foam molded body is self-extinguishing. A burning rate of 80 mm/min or less can be evaluated that it has excellent flame retardancy. The combustibility of the foam molded body is preferably self-extinguishing.

Falling Ball Impact Value

A sample was prepared by cutting the foam molded body into a size of 215 mm × 40 mm × 20 mm, and the sample was placed on a pair of holding members arranged in a span of 155 mm. Then, a steel ball having a weight of 321 g was dropped from a predetermined height at an intermediate position between the holding members and at a center position in the width direction of the sample to check whether the sample was broken.
This test was repeated by changing the height at which the steel ball was dropped, and the lowest value of height at which the sample was broken was defined as the falling ball impact value to evaluate impact strength. Therefore, a higher falling ball impact value indicates higher impact strength.
A falling ball impact value of 25 cm or more can be evaluated as practical impact absorption, and 30 cm or more can be evaluated as excellent impact absorption.

Fusion Rate of Foam Molded Body

Using a rectangular parallelepiped foam molded body having a thickness of 30 mm and an upper surface with a length of 400 mm × a width of 300 mm, a cut line with a length of 300 mm and a depth of about 5 mm was made by using a cutter on the upper surface along the lateral direction. The foam molded body was divided into two along the cut line, and a fracture surface was observed. An arbitrary range including 50 or more foam particles was set on the fracture surface, and the number (a) of foam particles broken not on the surface but inside of the foam particles (strongly heat-fused foam particles) and the number (b) of foam particles broken at the interface between the foam particles (weakly heat-fused foam particles) were counted within this range, and the fusion rate (%) was calculated by the following formula.

$$\text{Fusion rate (\%)} = (a/(a + b)) \times 100$$

Moldability of Foam Molded Body; Water Vapor Pressure

Composite resin foam particles were placed in a mold (size: 300 mm × 400 mm × 30 mm) of a foam molding machine, and the composite resin foam particles were thermally fused together while foaming the composite resin foam particles by heating with water vapor.

During heating with water vapor (50 seconds), the fusion rate of the obtained foam molded bodies was determined for each case where the pressure of water vapor was changed from 0.08 MPa to 0.25 MPa at intervals of 0.01 MPa. Moldability was evaluated at the lowest vapor pressure value (minimum vapor pressure value) at which the fusion rate was 90% or more. When a foam molded body with good fusion can be obtained at a low vapor pressure, the molding equipment can be simplified, and the production energy can be reduced, resulting in low production cost and improved productivity.

If a foam molded body with a fusion rate of 90% or more can be obtained at a vapor pressure of 0.16 MPa or less, preferably 0.10 MPa or less, a foam molded body with good fusion can be obtained at a low regulated vapor pressure, resulting in good moldability and high productivity.

Storage Stability (Discoloration of Foam Molded Body)

An accelerated exposure test was performed on a test piece of 300 mm length × 400 mm width in a dark room using a constant temperature and humidity tester under the following conditions. The test piece is white.

Test chamber temperature: 55 to 65°C, relative humidity: 50 to 60%, test time: 168 hr, number of test piece: 10

For each test piece after the accelerated exposure test, the change in appearance color before and after the test was observed. When discoloration from white was not recognized even partially for all of the ten test pieces, it was determined that the foam molded body was not discolored. When a change from white was recognized even in a part of the test piece, it was determined that the foam molded body was discolored.

Polypropylene-Based Resin etc.

The polypropylene-based resins (PP) used in the Examples etc. and the high-density polyethylene resin (HDPE) used for comparison are as follows. Table 1 shows the physical properties of the polypropylene-based resins and high-density polyethylene resin.

F744NP: PP random copolymer (produced by Prime Polymer Co., Ltd., ethylene content: 7 mass%)
S-131: PP random copolymer (produced by Sumitomo Chemical Co., Ltd., ethylene content: 5 mass%)
PL500A: PP homopolymer (produced by SunAllomer Ltd.)
10S65B: high-density polyethylene (produced by Tosoh Corporation)

Table 1

| | PP | | | HDPE |
|---|---|---|---|---|
| Model number | F744NP | S-131 | PL500A | 10S65B |
| Resin type | PP (random copolymer) | PP (random copolymer) | PP (homo copolymer) | HDPE |
| Melting point (°C) | 140 | 133 | 162 | 126 |
| MFR (g/10 min) | 7 | 1.5 | 3 | 2 |

Ethylene-Vinyl Acetate Copolymer etc.

The ethylene-vinyl acetate copolymers (EVA) used in the Examples etc. and the ethylene-ethyl acrylate copolymer (EEA) used for comparison are as follows. Table 2 shows the physical properties of the ethylene-vinyl acetate copolymers and ethylene-ethyl acrylate copolymer.

EF0505: ethylene-vinyl acetate copolymer (produced by Asahi Kasei Corporation, vinyl acetate content: 4.7 mass%)
EF0510: ethylene-vinyl acetate copolymer (produced by Asahi Kasei Corporation, vinyl acetate content: 5 mass%)

LV430: ethylene-vinyl acetate copolymer (produced by Japan Polyethylene Corporation, vinyl acetate content: 15 mass%)

514R: ethylene-vinyl acetate copolymer (produced by Tosoh Corporation, model number: 514R, vinyl acetate content: 5 mass%)

A1100: ethylene-ethyl acrylate copolymer (produced by Japan Polyethylene Corporation, model number: A1100, ethyl acrylate content: 10 mass%)

Table 2

| | EVA | | | | EEA |
|---|---|---|---|---|---|
| | EF0505 | EF0510 | LV430 | 514R | A1100 |
| Melting point (°C) | 108 | 108 | 89 | 101 | 104 |
| MFR (g/10 min) | 0.5 | 1.0 | 1.0 | 0.4 | 0.4 |
| Molecular weight ratio Mw/Mn | 5.3 | 4.7 | Not measured | 7.2 | 3.0 |

Other materials used in the Examples etc. are shown below.

Fine silica: silica (produced by Nippon Aerosil Co., Ltd., model number: AEROSIL200)

Talc: talc masterbatch produced by Nitto Funka Kogyo K.K. (product name: Talpet 70P, average particle size (D50): 12 $\mu$m, specific surface area: 8.5 m$^2$/g, pure talc content: 70 mass%)

TAIC-6B: Tris(2,3-dibromopropyl)isocyanurate (produced by Nihon Kasei Co., Ltd.)

Biscumyl: 2,3-dimethyl-2,3-diphenylbutane (produced by Kayaku Nouryon Corporation, model number: Perkadox 30)

Example 1

Production of Seed Particles

F744NP as a polypropylene-based resin (A) and EF0505 as an ethylene-vinyl acetate copolymer (B) at a mass ratio of 40:60 were placed in a tumbler mixer, and mixed for 10 minutes. Fine silica as an inorganic component was added thereto in an amount of 0.25 mass% based on the total mass of the polypropylene-based resin (A) and the ethylene-vinyl acetate copolymer (B), and further mixed for 10 minutes, thereby obtaining a resin mixture (base resin).

The obtained resin mixture was supplied to an extruder, melt-kneaded at a temperature of 230 to 250°C, granulated by an underwater cutting method, and cut into oval-spherical (egg-shaped) particles to obtain polypropylene-based resin particles (seed particles, average mass: 0.6 mg) modified with an ethylene-vinyl acetate copolymer.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 120°C. Then, a solution obtained by dissolving 5 g of dicumyl peroxide (polymerization initiator) in 1100 g of a styrene monomer was added dropwise at a rate corresponding to 0.05 parts by mass/sec with respect to 100 parts by mass of the seed particles. After dropping, the resultant was maintained at 120°C for 1 hour, thereby impregnating the modified polypropylene-based resin particles with the styrene monomer. Thereafter, a dispersion medium prepared by dispersing 3 g of ethylenebisstearamide (foam regulator) in 100 g of pure water was added dropwise over 30 minutes. After dropping, the resultant was maintained at 115°C for 1 hour, thereby impregnating the seed particles with the styrene monomer and the foam regulator. After impregnation, the resultant was heated to 140°C and maintained at this temperature for 3 hours for polymerization (second polymerization).

60 g of TAIC-6B as a flame retardant and 10 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 30:70). Then, the composite resin particles were cooled to 30°C or less and taken out from the autoclave.

Production of Expandable Particles

2 kg (100 parts by mass) of the composite resin particles, 2 kg of water, and 2.0 g of sodium dodecylbenzenesulfonate (surfactant) were placed in an autoclave equipped with a stirrer having an inner volume of 5 liters. Further, 300 g (520 mL, 15 parts by mass based on 100 parts by mass of the composite resin particles) of isopentane as a foaming agent was supplied, then the temperature was raised to 70°C, and stirring was continued for 4 hours, whereby expandable particles could be obtained. Thereafter, the mixture was cooled to 30°C or less, the autoclave was depressurized after completion of the cooling, and the surfactant was immediately washed with distilled water, dehydrated, and dried to obtain expandable particles.

Production of Foam Particles

The obtained expandable resin particles were put into a cylindrical pre-foaming machine equipped with a stirrer having an inner volume of 50 L, and heated with water vapor of 0.02 MPa while stirring to produce foam particles having a bulk density of 25 kg/m$^3$ (generally also referred to as "pre-foam particles"). The foam particles were classified by a 0.9-mm mesh sieve, and the amount of powder was measured by measuring the mass of powder discharged because they were out of the classification.

Production of Foam Molded Body

The obtained foam particles were left at 23°C for one day, and then placed in a mold for molding (length 400 mm × width 300 mm × thickness 30 mm) of an automatic foamed bead molding machine (DPM-7454, produced by DABO Japan Ltd.). Water vapor of 0.09 MPa was introduced into the mold for 50 seconds to heat and foam the foam particles, followed by cooling until the maximum surface pressure of the resulting foam molded body decreased to 0.01 MPa, thereby obtaining a foam molded body having a density of 25 kg/m$^3$.

The obtained foam molded body had good appearance and fusion. The obtained foam molded body was subjected to various tests. The results are shown in Table 3.

Examples 2 to 6 and Comparative Examples 3 and 4

The foam molded bodies of Examples 2 to 5 and Comparative Examples 3 and 4 were produced in the same manner as in Example 1, except that the materials, amounts, foam particle bulk density, etc. shown in Table 3 were used. The obtained foam molded bodies were subjected to various tests. The results are shown in Table 3. The meaning of each term in Table 3 is as follows.

Mw/Mn of B: the ratio of the mass average molecular weight of the ethylene-vinyl acetate copolymer (B) to the number average molecular weight thereof

A:B mass ratio: the mass ratio of the polypropylene-based resin (A) and the ethylene-vinyl acetate copolymer (B)

Content of inorganic component (%): the addition ratio (mass%) of the inorganic component relative to the total mass of the polypropylene-based resin (A) and the ethylene-vinyl acetate copolymer (B)

A+B:PS mass ratio: the ratio of the total mass of the polypropylene-based resin (A) and the ethylene-vinyl acetate copolymer (B) to the mass of polystyrene

Amount of flame retardant added: the addition ratio (mass%) of the flame retardant relative to the total mass of the polypropylene-based resin (A) and the ethylene-vinyl acetate copolymer (B)

Amount of flame retardant aid added: the addition ratio (mass%) of the flame retardant aid relative to the total mass of the polypropylene-based resin (A) and the ethylene-vinyl acetate copolymer (B)

Gas species A: butane (volume ratio of normal butane to isobutane = 7:3) as a foaming agent

Gas species B: isopentane as a foaming agent

Example 7

Production of Seed Particles

Seed particles were produced in the same manner as in Example 1, except that the materials, amounts, etc. shown in Table 3 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 1000 g of the seed particles were dispersed in the dispersing medium at 30°C and maintained for 10 minutes, and then heated to 60°C to obtain a suspension. Further, while maintaining this suspension at 60°C, a liquid obtained by dissolving 1.0 g of dicumyl peroxide (polymerization initiator) in 500 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 120°C. Then, a solution obtained by dissolving 3 g of dicumyl peroxide (polymerization initiator) in 500 g of a styrene monomer was added dropwise at a rate corresponding to 0.05 parts by mass/sec with respect to 100 parts by mass of the seed particles. After dropping, the resultant was maintained at 120°C for 1 hour, thereby impregnating the modified polypropylene-based resin particles with the styrene monomer. Thereafter, a dispersion medium prepared by dispersing 3 g of ethylenebisstearamide (foam regulator) in 100 g of pure water was added dropwise over 30 minutes. After dropping, the resultant was maintained at 120°C for 1 hour, thereby impregnating the seed particles with the styrene monomer and the foam regulator. After impregnation, the resultant was heated to 140°C and maintained at this temperature for 3 hours for polymerization (second polymerization), thereby producing composite resin particles (ratio of the total mass of the polypropylene-based resin (A) and the ethylene-vinyl acetate copolymer (B) to the mass of polystyrene = 50:50). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A, the bulk density of the foam particles was 33 kg/m$^3$, and the density of the foam molded body was 33 kg/m$^3$ in the production of the expandable particles.

Example 8

Production of Seed Particles

Seed particles were produced in the same manner as in Example 1, except that the materials, amounts, etc. shown in Table 4 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 5 g of dicumyl peroxide (polymerization initiator) in 20 g of butyl acrylate and 1080 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with butyl acrylate and the styrene monomer. Thereafter, a dispersion medium prepared by dispersing 3 g of ethylenebisstearamide (foam regulator) in 100 g of pure water was added dropwise over 30 minutes. After dropping, the resultant was maintained at 125°C for 1 hour, thereby impregnating the seed particles with butyl acrylate, the styrene monomer, and the foam regulator. After impregnation, the resultant was heated to 140°C and maintained at this temperature for 3 hours for polymerization (second polymerization).

60 g of TAIC-6B as a flame retardant and 20 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 30:70). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A in the production of the expandable particles.

Example 9

Production of Seed Particles

Seed particles were produced in the same manner as in Example 1, except that the materials, amounts, etc. shown in Table 4 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 5 g of dicumyl peroxide (polymerization initiator) in 30 g of butyl acrylate and 1070 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with butyl acrylate and the styrene monomer. Thereafter, a dispersion medium prepared by dispersing 3 g of ethylenebisstearamide (foam regulator) in 100 g of pure water was added dropwise over 30 minutes. After dropping, the resultant was maintained at 125°C for 1 hour, thereby impregnating the seed particles with butyl acrylate, the styrene monomer, and the foam regulator. After impregnation, the resultant was heated to 140°C and maintained at this temperature for 3 hours for polymerization (second polymerization).

60 g of TAIC-6B as a flame retardant and 20 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 30:70). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A in the production of the expandable particles.

Example 10

Production of Seed Particles

F744NP as a polypropylene-based resin (A) and EF0505 as an ethylene-vinyl acetate copolymer (B) at a mass ratio of 80:20 were placed in a tumbler mixer, and mixed for 10 minutes. A carbon black masterbatch (produced by Dainichiseika Color & Chemicals Mfg. Co., Ltd., product name: PPRM-10H381, carbon black content: 45 mass%) was added thereto in an amount in which the carbon black content was 5 mass% based on the total mass of the polypropylene-based resin (A) and the ethylene-vinyl acetate copolymer (B), and further mixed for 10 minutes, thereby obtaining a resin mixture (base resin).

The obtained resin mixture was supplied to an extruder, melt-kneaded at a temperature of 230 to 250°C, granulated by an underwater cutting method, and cut into oval-spherical (egg-shaped) particles to obtain polypropylene-based resin particles (seed particles, average mass: 0.6 mg) modified with an ethylene-vinyl acetate copolymer.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 600 g of the seed particles were dispersed in the dispersing medium at 30°C and maintained for 10 minutes, and then heated to 60°C to obtain a suspension. Further, while maintaining this suspension at 60°C, a liquid obtained by dissolving 0.6 g of dicumyl peroxide (polymerization initiator) in 300 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 5 g of dicumyl peroxide (polymerization initiator) in 20 g of butyl acrylate and 1080 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with butyl acrylate and the styrene monomer. After impregnation, the resultant was heated to 140°C and maintained at this temperature for 3 hours for polymerization (second polymerization).

60 g of TAIC-6B as a flame retardant and 20 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 30:70). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A in the production of the expandable particles.

Example 11

Production of Seed Particles

Seed particles were produced in the same manner as in Example 10, except that the materials, amounts, etc. shown in Table 4 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 60°C to obtain a suspension. Further, while maintaining this suspension at 60°C, a liquid obtained by dissolving 1.0 g of dicumyl peroxide (polymerization initiator) in 400 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 4 g of dicumyl peroxide (polymerization initiator) in 10 g of butyl acrylate and 790 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with butyl acrylate and the styrene monomer. Thereafter, the resultant was heated to 140°C and maintained at this temperature for 3 hours for polymerization (second polymerization). 60 g of TAIC-6B as a flame retardant and 20 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 40:60). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A in the production of the expandable particles.

Example 12

Production of Seed Particles

Seed particles were produced in the same manner as in Example 10, except that the materials, amounts, etc. shown in Table 4 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 60°C to obtain a suspension. Further, while maintaining this suspension at 60°C, a liquid obtained by dissolving 0.8 g of dicumyl peroxide (polymerization initiator) in 400 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 125°C. Then, a solution obtained by dissolving 4 g of dicumyl peroxide (polymerization initiator) in 800 g of a styrene monomer was added dropwise at a rate corresponding to 0.05 parts by mass/sec with respect to 100 parts by mass of the seed particles. After dropping, the resultant was maintained at 125°C for 1 hour, thereby impregnating the modified polypropylene-based resin particles with the styrene monomer. Thereafter, the resultant was heated to 140°C and maintained at this temperature for 3 hours for polymerization (second polymerization). 60 g of TAIC-6B as a flame retardant and 20 g of biscumyl as a flame retardant aid were put into the reaction liquid. After putting them, the temperature of the reaction system was raised to 140°C, and stirring was continued for 3 hours, thereby producing flame retardant-containing composite resin particles (ratio of the total mass of the polypropylene-based resin (A) and the ethylene-vinyl acetate copolymer (B) to the mass of polystyrene = 40:60). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1.

Comparative Example 1

Production of Seed Particles

Seed particles were produced in the same manner as in Example 1, except that the materials, amounts, etc.

shown in Table 3 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 1400 g of the seed particles were dispersed in the dispersing medium at 30°C and maintained for 10 minutes, and then heated to 60°C to obtain a suspension. Further, while maintaining this suspension at 60°C, a liquid obtained by dissolving 5 g of dicumyl peroxide (polymerization initiator) in 600 g of a styrene monomer was added dropwise over 30 minutes, and the suspension was then maintained for 30 minutes to impregnate the seed particles with the styrene monomer. After impregnation, the temperature was raised to 140°C, and polymerization was carried out at this temperature for 4 hours, thereby producing composite resin particles (ratio of the total mass of the polypropylene-based resin (A) and the ethylene-vinyl acetate copolymer (B) to the mass of polystyrene = 70:30). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A.

Comparative Example 2

Production of Seed Particles

Seed particles were produced in the same manner as in Example 1, except that the materials, amounts, etc. shown in Table 3 were used.

Production of Composite Resin Particles

40 g of magnesium pyrophosphate (dispersant), 0.6 g of sodium dodecylbenzenesulfonate (surfactant), and 2 kg of pure water were placed in an autoclave equipped with a stirrer having an inner volume of 5 liters to obtain a dispersing medium. 800 g of the seed particles were dispersed in the dispersing medium at 30°C and maintained for 10 minutes, and then heated to 60°C to obtain a suspension. Further, while maintaining this suspension at 60°C, a liquid obtained by dissolving 0.8 g of dicumyl peroxide (polymerization initiator) in 400 g of a styrene monomer was added dropwise over 30 minutes, and the suspension was then maintained for 30 minutes to impregnate the seed particles with the styrene monomer. After impregnation, the temperature was raised to 140°C, and polymerization (first polymerization) was carried out at this temperature for 2 hours.

Next, a dispersion prepared by dispersing 3 g of sodium dodecylbenzenesulfonate in 20 g of pure water was added dropwise over 10 minutes to the reaction liquid cooled to 120°C. Then, a solution obtained by dissolving 5 g of dicumyl peroxide (polymerization initiator) in 800 g of a styrene monomer was added dropwise at a rate corresponding to 0.05 parts by mass/sec with respect to 100 parts by mass of the seed particles. After dropping, the resultant was maintained at 120°C for 1 hour, thereby impregnating the modified polypropylene-based resin particles with the styrene monomer. Thereafter, a dispersion medium prepared by dispersing 3 g of ethylenebisstearamide (foam regulator) in 100 g of pure water was added dropwise over 30 minutes. After dropping, the resultant was maintained at 120°C for 1 hour, thereby impregnating the seed particles with the styrene monomer and the foam regulator. After impregnation, the resultant was heated to 140°C and maintained at this temperature for 3 hours for polymerization (second polymerization), thereby producing composite resin particles (ratio of the total mass of the polypropylene-based resin (A) and the ethylene-vinyl acetate copolymer (B) to the mass of polystyrene = 40:60). Then, the composite resin particles were cooled to 30°C or less and taken out from the autoclave.

Production of Expandable Particles, Foam Particles, and Foam Molded Body

Expandable particles, foam particles, and a foam molded body were obtained in the same manner as in Example 1, except that the gas species was A.

Table 3

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Seed particles | (A) PP or HDPE | F744NP | F744NP | S-131 | PL500A | F744N P | F744N P | F744N P | F744N P | F744NP | 10S65B | F744N P |
| | (B) EVAor EEA | EF0505 | EF0510 | LV430 | 514R | EF0505 | EF0505 | EF0505 | EF0505 | - | EF0505 | A1100 |
| | Mw/Mn of B | 5.3 | 4.7 | Not measured | 7.2 | 5.3 | 5.3 | 5.3 | 5.3 | - | 5.3 | 3 |
| | A:B mass ratio | 40:60 | 40:60 | 40:60 | 20:80 | 10:90 | 40:60 | 40:60 | 40:60 | 40:60 | 40:60 | 40:60 |
| | Type of inorganic component | Silica | - | Talc | Silica | - | Silica | Silica | - | - | Silica | Silica |
| | Content of inorganic component (%) | 0.25 | - | 0.25 | 0.25 | - | 0.25 | 0.25 | - | - | 0.25 | 0.25 |

(continued)

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Composite resin particles | A+B:PS mass ratio | 30:70 | 30:70 | 30:70 | 30:70 | 30:70 | 30:70 | 50:50 | 70:30 | 40:60 | 30:70 | 30:70 |
| | Type of flame retardant | TAIC-6B | TAIC-6B | TAIC-6B | TAIC-6B | TAIC-6B | - | TAIC-6B | TAIC-6B | TAIC-6B | TAIC-6B | TAIC-6B |
| | Amount of flame retardant added | 3.00% | 3.00% | 3.00% | 3.00% | 3.00% | - | 3.00% | 3.00% | 3.00% | 2.50% | 3.00% |
| | Flame retardant aid | Biscumyl | Biscumyl | Biscumyl | Biscumyl | Biscumyl | - | Biscumyl | Biscumyl | Biscumyl | Biscumyl | Biscumyl |
| | Amount of flame retardant aid added | 0.50% | 0.50% | 0.50% | 0.50% | 0.50% | - | 0.50% | 0.50% | 0.50% | 0.50% | 0.50% |
| | Gas species | B | A | B | A | A | A | A | A | A | B | A |
| Productivity evaluation | (P) Amount of powder generated | 0.01% | 0.02% | 0.02% | 0.01% | 0.01% | 0.01% | 0.01% | 0.05% | 0.01% | 0.02% | 0.07% |
| | Minimum vapor pressure value (MPa) | 0.09 | 0.09 | 0.09 | 0.10 | 0.15 | 0.09 | 0.09 | 0.28 | 0.18 | 0.09 | 0.09 |

(continued)

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Physical property evaluation | Foam particle bulk density (kg/m$^3$) | 25 | 25 | 25 | 25 | 25 | 40 | 33 | 25 | 25 | 25 | 25 |
| | Bending strength (MPa) | 0.44 | 0.44 | 0.43 | 0.38 | 0.43 | 0.74 | 0.47 | 0.37 | 0.41 | 0.43 | 0.44 |
| | Bending breaking point | 24 mm | 23 mm | 22 mm | 16 mm | 22 mm | 28 mm | 21mm | 14 mm | 20 mm | 23 mm | 26 mm |
| | Heating dimensional change rate (%) | 1.0 | 1.0 | 1.2 | 0.90 | 0.60 | 0.90 | 0.90 | 0.40 | 0.50 | 1.1 | 1.2 |
| | Burning rate (mm/min) | Self-extinguishing | Self-extinguishing | Self-extingishin,q | Sef-extinguishing | Sef-extinguishing | 62 | Self-extinguishing | Self-extinguishing | Self-extinguishing | 87 | Self-extinguishing |
| | Falling ball impact value | 36.5 | 37.5 | 38.5 | 26.5 | 33.5 | 48.5 | 32.5 | 22 | 30.5 | 37.5 | 46.5 |
| | Discoloration of molded body | Not discolored | Not discolored | Not discolored | Not discolored | Not discolored | Not discolored | Not discolored | Not discolored | Not discolored | Discolored | Not discolored |

Table 4

| | | Example 8 | Example 9 | Example 10 | Example 11 | Example 12 |
|---|---|---|---|---|---|---|
| Seed particles | (A) PP | F744NP | F744NP | F744NP | F744NP | F744NP |
| | (B) EVA | EF0505 | EF0505 | EF0505 | EF0505 | EF0505 |
| | Mw/Mn of B | 5.3 | 5.3 | 5.3 | 5.3 | 5.3 |
| | A:B mass ratio | 80:20 | 90:10 | 80:20 | 70:30 | 70:30 |
| | Type of inorganic component | - | - | - | - | - |
| | Content of inorganic component (%) | - | - | - | - | - |
| | Carbon component | Not added | Not added | Added | Added | Added |
| | Amount of carbon component added (%) | - | - | 5.0 | 5.0 | 5.0 |
| Composite resin particles | A+B:PS mass ratio | 30:70 | 30:70 | 30:70 | 40:60 | 40:60 |
| | Type of (meth) acrylic acid ester | Butyl acrylate | Butyl acrylate | Butyl acrylate | Butyl acrylate | - |
| | Amount of (meth)acrylic acid ester added (%) | 1.45 | 2.19 | 1.45 | 0.84 | |
| | Type of flame retardant | TAIC-6B | TAIC-6B | TAIC-6B | TAIC-6B | TAIC-6B |
| | Amount of flame retardant added | 3.00% | 3.00% | 3.00% | 3.00% | 3.00% |
| | Flame retardant aid | Biscumyl | Biscumyl | Biscumyl | Biscumyl | Biscumyl |
| | Amount of flame retardant aid added | 0.50% | 0.50% | 0.50% | 0.50% | 1.00% |
| | Gas species | A | A | A | A | B |
| Productivity evaluation | (P) Amount of powder generated | 0.01% | 0.00% | 0.00% | 0.01% | 0% |
| | Minimum vapor pressure value (MPa) | 0.08 | 0.09 | 0.09 | 0.09 | 0.13 |

(continued)

| | | Example 8 | Example 9 | Example 10 | Example 11 | Example 12 |
|---|---|---|---|---|---|---|
| Physical property evaluation | Foam particle bulk density (kg/m$^3$) | 25 | 25 | 25 | 25 | 25 |
| | Bending strength (MPa) | 0.44 | 0.43 | 0.44 | 0.46 | 0.47 |
| | Bending breaking point | 24 mm | 21 mm | 23 mm | 22 mm | 23 mm |
| | Heating dimensional change rate (%) | 1.1 | 0.90 | 1.5 | 1.3 | 0.50 |
| | Burning rate (mm/min) | Self-extinguishing | Self-extinguishing | Self-extinguishing | Self-extinguishing | Self-extinquishinq |
| | Falling ball impact value | 36.5 | 33.5 | 37.5 | 36.5 | 36.5 |
| | Colorinq of molded body | Not colored | Not colored | Not colored | Not colored | Not colored |

In Comparative Example 1 in which the A+B:PS ratio was 70:30, the amount of powder was as large as 0.05 mass%, the minimum vapor pressure value was as large as 0.28 MPa, and the falling ball impact value was small.

In Comparative Example 2 in which an ethylene-vinyl acetate copolymer (EVA) was not used and only a polypropylene-based resin was used as a base resin, the minimum vapor pressure value was as high as 0.18 MPa, and a large amount of energy was required for foam molding.

In Comparative Example 3 in which a high-density polyethylene-based resin was used in place of the polypropylene-based resin, it was not self-extinguishing and was inferior to other examples in flame retardancy. In addition, in the accelerated storage stability test, the foam molded body was colored in a light red color.

In Comparative Example 4 in which an ethylene-ethyl acrylate copolymer (EEA) was used, the amount of powder was as large as 0.07 mass%.

Examples 1 to 7 showed excellent results in all evaluation items, and in particular, Examples 1 and 2 showed more excellent results in all evaluation items. In addition, the foam molded body of the present invention showed excellent flame retardancy even without mixing a flame retardant (Example 6).

In Examples 8 to 11, although the amount of the polypropylene-based resin relative to the ethylene-vinyl acetate copolymer was large, the polystyrene-based resin contained a resin component derived from butyl acrylate, whereby the minimum vapor pressure value could be kept low, and the energy required for foam molding could be reduced.

In Examples 10 to 12, although the carbon component was contained, sufficient mechanical properties (bending strength, bending breaking point, and falling ball impact value) were exhibited.

**Claims**

1. Composite resin particles comprising a polypropylene-based resin, an ethylene-vinyl acetate copolymer, and a polystyrene-based resin.

2. The composite resin particles according to claim 1, wherein the content of the polypropylene-based resin is 2 to 35 mass%, the content of the ethylene-vinyl acetate copolymer is 3 to 50 mass%, and the content of the polystyrene-based resin is 40 to 95 mass%, based on the total mass of the composite resin particles.

3. The composite resin particles according to claim 1 or 2, wherein the content of the ethylene-vinyl acetate copolymer in the composite resin particles is 60 to 1000 parts by mass based on 100 parts by mass of the content of the polypropylene-based resin.

4. The composite resin particles according to claim 1 or 2, wherein the content of the ethylene-vinyl acetate copolymer in the composite resin particles is 10 to 60 parts by mass based on 100 parts by mass of the content of the polypropylene-based resin, the polystyrene-based resin comprises a (meth)acrylic acid ester-derived resin component and a styrene-based monomer-derived resin component, and the (meth)acrylic acid ester-derived resin component is contained in an amount of 0.05 to 5.00 mass% of the mass of the styrene-based monomer-derived resin component.

5. The composite resin particles according to any one of claims 1 to 4, wherein the ratio of the total content mass of the polypropylene-based resin and the ethylene-vinyl acetate copolymer in the composite resin particles to the content mass of the polystyrene-based resin in the composite resin particles is 5/95 to 60/40.

6. The composite resin particles according to any one of claims 1 to 5, wherein the ethylene-vinyl acetate copolymer has a melting point of 100 to 120°C.

7. The composite resin particles according to any one of claims 1 to 6, wherein the ethylene-vinyl acetate copolymer has a ratio (Mw/Mn) of mass average molecular weight (Mw) to number average molecular weight (Mn) of 1.0 to 7.0.

8. The composite resin particles according to any one of claims 1 to 7, wherein the ethylene-vinyl acetate copolymer has a melt flow rate of 0.5 g/10 min to 10 g/10 min.

9. The composite resin particles according to any one of claims 1 to 8, wherein the polypropylene-based resin has a melting point of 130 to 150°C.

10. The composite resin particles according to any one of claims 1 to 9, wherein the polypropylene-based resin is random polypropylene.

11. The composite resin particles according to any one of claims 1 to 10, wherein the composite resin particles further comprise a flame retardant, and the content thereof is 0.5 to 10 mass% of the mass of the composite resin particles excluding the flame retardant.

12. The composite resin particles according to claim 11, wherein the flame retardant is a halogen-based flame retardant.

13. The composite resin particles according to any one of claims 1 to 12, wherein the composite resin particles further comprise an inorganic component, and the content thereof is 0.01 to 5 mass% of the mass of the composite resin particles.

14. The composite resin particles according to claim 13, wherein the inorganic component is talc or silica.

15. The composite resin particles according to any one of claims 1 to 14, which are seed polymerization particles in which seed particles containing the polypropylene-based resin and the ethylene-vinyl acetate copolymer are impregnated and polymerized with a styrene-based monomer.

16. Foam particles comprising the composite resin particles according to any one of claims 1 to 15.

17. The foam particles according to claim 15, which have a bulk density of 10 kg/m$^3$ to 200 kg/m$^3$.

18. A foam molded body comprising the foam particles according to claim 16 or 17.

19. The foam molded body according to claim 18, which has a density of 20 kg/m$^3$ to 50 kg/m$^3$.

20. An automobile component comprising the foam molded body according to claim 18 or 19.

| INTERNATIONAL SEARCH REPORT | International application No. |
| --- | --- |
| | **PCT/JP2022/012689** |

**A.     CLASSIFICATION OF SUBJECT MATTER**

*C08F 255/02*(2006.01)i; *C08J 3/12*(2006.01)i; *C08L 23/08*(2006.01)i; *C08L 23/12*(2006.01)i; *C08L 25/06*(2006.01)i; *C08J 9/20*(2006.01)i; *C08K 3/26*(2006.01)i; *C08K 3/36*(2006.01)i

FI:    C08L25/06; C08J9/20; C08L23/12; C08K3/36; C08K3/26; C08L23/08; C08F255/02; C08J3/12 Z CET

According to International Patent Classification (IPC) or to both national classification and IPC

**B.     FIELDS SEARCHED**

Minimum documentation searched (classification system followed by classification symbols)

C08F255/02; C08J3/12; C08L23/08; C08L23/12; C08L25/06; C08J9/20; C08K3/26; C08K3/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2012-167148 A (SEKISUI PLASTICS CO., LTD.) 06 September 2012 (2012-09-06) | 1-20 |
| A | JP 8-208916 A (SUMITOMO CHEM. CO., LTD.) 13 August 1996 (1996-08-13) | 1-20 |
| A | JP 2020-50784 A (SEKISUI PLASTICS CO., LTD.) 02 April 2020 (2020-04-02) | 1-20 |
| A | JP 2018-53029 A (SEKISUI PLASTICS CO., LTD.) 05 April 2018 (2018-04-05) | 1-20 |

☐ Further documents are listed in the continuation of Box C.          ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **17 May 2022** | **31 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/012689**

| Patent document cited in search report | | | Publication date (day/month/year) | Patent family member(s) | | | Publication date (day/month/year) |
|---|---|---|---|---|---|---|---|
| JP | 2012-167148 | A | 06 September 2012 | (Family: none) | | | |
| JP | 8-208916 | A | 13 August 1996 | US | 5726215 | A | |
| JP | 2020-50784 | A | 02 April 2020 | (Family: none) | | | |
| JP | 2018-53029 | A | 05 April 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4718645 B
- JP 2015189912 A

- JP 6251409 B